# EUROPEAN PATENT SPECIFICATION

(11) **EP 0 818 561 B1**
(45) Date of publication and mention of the grant of the patent: **03.05.2000**
(21) Application number: 95942212.2
(22) Date of filing: 28.12.1995
(51) Int. Cl.: C23C 18/12, C03C 17/36, G02B 1/10

(54) **PROTECTION COATINGS PRODUCED BY SOL-GEL ON SILVER REFLECTORS**
SCHUTZSCHICHTEN HERGESTELLT DURCH SOL-GEL AUF SILBERREFLEKTOREN
REVETEMENTS PROTECTEURS PRODUITS PAR SOL-GEL SUR DES REFLECTEURS EN ARGENT

(43) Date of publication of application: 14.01.1998
(73) Proprietor: CONSEJO SUPERIOR DE INVESTIGACIONES CIENTIFICAS, 28006 Madrid (ES); CENTRO DE INVESTIGACIONES ENERGETICAS MEDIOAMBIENTALES Y TECNOLOGICAS (C.I.E.M.A.T.), E-28040 Madrid (ES)
(72) Inventor: DURAN, Alicia Instituto de Cerámica y Vidrio, 28500 Arganda del Rey (ES) (ES); MORALES, Angel; Instituto de Energias Renovables;, 28040 Madrid (ES)
(74) Representative: Ungria Lopez, Javier
(86) International application number: ES9500155
(87) International publication number: WO9724471

(56) References cited:
- ES-A- 2 063 696
- Mat. Res. Soc. Symp. Proc., vol. 121, 1988, USA, pages 631-634 REDD: "Sol-gel protective films for metal solar mirrors"
- Solar Energy Materials, vol. 14, 1986, NL, pages 269-287, Petit: "Use of sol-gel thin films in solar energy applications"

## Description

This patent discloses a process for producing coatings on silver reflectors, which allows a significant improvement of the behavior of this metal against oxidation at high temperatures.

The use of pure metal silver reflectors is limited by the degradation caused by the sulfides of the environment that blacken their surface and they lose their highly reflective nature. Synthetic material coatings have been used to protect the silver surface against the attack of chemical agents at room temperature as well as at high temperatures.

Synthetic coatings may be divided into three classes: metal, organic and inorganic. The main disadvantages of the first two are their low thermal and chemical stability. Classic inorganic coatings also have several inconveniences, namely: complicated deposition processes (high temperatures, special atmospheres), weak adherence to the metal substrate and low mechanical and thermal compatibility of the substrate-coating system.

Preparation of vitreous and crystalline coatings is one of the most important fields of application of the sol-gel technique. Layers of very different compositions have been produced for this process in order to improve or provide new properties to the coated substrates. Among the advantages of this process is the generation of vitreous structures in very broad margins of composition, which makes it possible to reduce or eliminate the effects of the grain edge. The obtained adherence is very high given that chemical bonds are produced between the coating and the substrate; this fact explains, on the other hand, the good thermal and mechanical stability of the coatings. These properties, together with the low diffusivity of the oxygen in SiO₂ and the good chemical behavior of other ceramic oxides such as Al₂O₃, ZrO₂ or TiO₂, convert the single or multicomponent coatings of these oxides into excellent candidates for chemical and anticorrosive protection of metal materials.

ES-A-2063696 discloses sol-gel produced protective coatings of the aforementioned type for stainless steel. In the preparation of the coatings, nitric or hydrochloric acid, and acetic acid are used as catalyst for hydrolyzation. Nitric and hydrochloric acid are highly oxidative so that the ions originating from these acids, in aqueous medium, cause a drastic reduction of electrochemical potential of silver and thus oxidize silver.

Consequently, the objectives of the present invention are:
1) To prepare vitreous or polycrystalline coatings of different ceramic oxides using the sol-gel method and the techniques of immersion and spraying on metal silver reflective substrates in order to improve the behavior of the same against oxidation at high temperatures.
2) To provide a process for producing inorganic coatings of oxides on metal silver reflectors, of various vitreous or polycrystalline compositions and that have an excellent homogeneity, high adherence and good mechanical and thermal compatibility with the metal substrate. It is a simple and economical process which is applicable to multiple forms and sizes of substrates.

These objectives have been achieved by a process for producing protective coating solutions for silver substrates or silver coatings produced by sol-gel, the process comprising dissolving and hydrolyzing metal alkoxide selected from at least one of Si-alkoxide, Zr-alkoxide, Ti-alkoxide, Al-alkoxide, B-alkoxide and combinations thereof, water, alcohol, and optionally acetates or/nitrates of Ca and Ba and H₃PO₄, in the presence of an acid catalyst for a hydrolysis reaction, wherein at least sulfuric acid is used as the catalyst in a ratio of H₂SO₄/alkoxide of 0.016-0.816, by a method of providing coatings using said coating solutions, on silver substrates or silver coatings, and by a coating obtained by said method.

Preferred embodiments of the invention are recited in the description and in the dependent claims.

The coatings of different compositions on silver reflective substrates are deposited by different techniques: electroless plating, evaporation and electrodeposition. The obtained coatings result in an effective barrier against dry oxidation at high temperatures.

### Detailed description

### Preparation of the solutions

Taking into account the type of possible applications, different single and multicomponent compositions, that include 0-100% molar SiO₂, 0-100% molar ZrO₂, 0-100% molar TiO₂, 0-100% molar Al₂O₃ and 0-80% molar B₂O₃, have been studied. In some cases the coatings may also contain from 1-20% molar CaO, BaO and P₂O₅.

Different commercial metal alkoxides have been used as precursors of the different oxides.

The solutions are prepared by dissolving the alkoxides in distilled water and alcohol in the presence of a catalyst.

The concentration of water depends on the nature of the alkoxide used, and the water/alkoxide ratio may vary from zero until it exceeds the stoichiometric ratio needed to hydrolyze all the alcohol radicals of the alkoxide.

The alcohol used may be the one corresponding to the alcohol radicals present in the alkoxide, a mixture thereof with ethanol or ethanol directly. The initial alcohol/alkoxide ratio varies between 2 and 10 and the final concentration thereof depends on the viscosity that is to be obtained.

H₂SO₄ and acetic acid are used as catalysts. The concentrations of the catalyst depend on the hydrolysis kinetics and condensation of the alkoxides used. The pH suitable to obtain stable solutions varies between 0.5 and 3.

In order to obtain multicomponent coatings, the sequence and addition times of the alkoxides must take into account the hydrolysis velocities of each one of them. In general, prehydrolysis of the slowest ones is carried out and the ones with the quickest hydrolysis are added at the end in order to favor the formation of multicomponent units at a molecular scale.

The addition of alkoxides very sensitive to moisture must be done very slowly in an anhydrous atmosphere in order to avoid precipitation of insoluble hydrates.

Single and multicomponent coatings may be obtained by one-step or multi-step processes at different pH values and H₂O/TEOS ratios in order to control the hydrolysis process and to obtain coatings with different densities.

Once a homogeneous and transparent solution has been obtained, the same is allowed to age for periods between 24 hours and one week. The coatings are made when the process of hydrolysis and polymerization give rise to stable solutions, with a minimum variation of viscosity in time.

Stability and rheological properties of the solutions are controlled by means of the density and viscosity thereof, measured by pycnometry and by the Ostwald method.

### Preparation and protection of the substrates

The type of substrate used as a support of the silver reflective film is of vital importance to the behavior of the reflector assembly. It may even alter the durability of the same upon strengthening degradation mechanisms. The substrates used for the silver reflective film have been: glass, stainless steel, carbon steel and electropolished silver plate.

The substrates used in the deposition of the silver film have the exclusive role of a support and they must have a series of properties such as: rigidity, to be chemically inert, high specularity and low diffusion coefficient of the silver in them at high temperatures. None of the materials used as substrates have these properties, therefore, it is necessary to protect them in order to improve their performance. SiO₂ is a good barrier against metal (1) oxidation. Deposited on steel it prevents the diffusion of the silver at high temperatures in the structure of the steel.

Protective coatings with a composition of (100-x) SiO₂-xMₙO₂ with x=0-20%, wherein MₙO₂ = Al₂O₃, TiO₂, ZrO₂ B₂O₃, have been used.

The conditions of the surfaces of the reflectors to be coated are of the utmost importance for the stability of the coatings and the behavior of the same as protective films. The substrate surface must be free of oxides and fatty substances. The glass substrates are washed with soap in an ultrasound bath; they are thoroughly rinsed with distilled water and they are stored in ethyl alcohol for hydroxylation thereof. The metal substrates are degreased and mechanically polished until the required specular finish is achieved; they are oxidized for one hour at 350°C and they are kept in ethanol for one day to enhance adhesion of the protective film.

Deposition of films may be carried out by immersion or spraying. The first method is the most convenient one for large pieces and regular surfaces, working in the majority of the cases in an air atmosphere. Spraying is appropriate when it is necessary to coat a large number of pieces, above all if they are small, since this is usually done in on-line processes.

In the immersion process, the pieces are submerged in the solution and they are later removed at a constant velocity. The thickness of the deposited film is a function of the velocity of removal, of the contact angle between the piece and the solution and of the density, alkoxide concentration and solution viscosity. The deposition process has a great influence on the quality of the coatings: the velocities should not exceed 30 cm/min in order to avoid nonhomogeneities and "waves"; the atmospheric humidity, which in some cases facilitates hydrolysis of the residual alkoxide groups and the rapid gelling of the film, for certain compositions (especially those that contain B₂O₃) cause the precipitation of hydrates which in turn cause nonhomogeneities and are the source of cracks in the coating.

The process of deposition by spraying is controlled by several parameters proper to the equipment and by the conditions of the solution. In particular: spraying velocity, size and distribution of the particles, carrier gas, type and distribution of the nozzles for the equipment, and viscosity, density and concentration of the solution. In most cases, this process is carried out in special atmospheres.

After deposition, drying at a temperature between 50 and 150° C for 15-30 minutes is carried out in order to eliminate the residual solvent that remains trapped in the pores of the gel.

Densification of the films is produced by thermal treatment whose temperature, heating velocity, time and atmosphere of the treatment depend on different factors: composition and concentration of the solutions, chemical and dimensional stability of the substrate and degree of densification needed so that the film carries out its role of a protective barrier. For the compositions studied, the temperature of the treatment varies between 400 and 600° C, the heating velocities between 2.5 and 10° C/min, the treatment times between 10 min. and 1 hour and the atmospheres used have been air, N₂ and Ar₂.

The thickness of the final coatings depends on the parameters of the process and on the composition thereof. Single layer, crack-free and perfectly homogeneous films have been produced with thicknesses between 0.05 and 0.5 µm. To achieve thicker layers it is necessary to use multilayer processes; in the compositions studied, multilayer coatings have been produced with thicknesses of up to 5 µm.

The thermal stability of the substrates protected by sol-gel coatings is excellent, acting as a barrier against the diffusion of silver in the substrate.

### Deposition of silver coatings

Once the substrate has been conveniently protected, deposition of the silver reflective film can be carried out by different techniques:
- High vacuum evaporation or cathodic spraying;
- Electroless deposition, an electrochemical technique wherein it is not necessary to apply a difference of external potential in order to produce the reduction of the silver of the bath on the substrate.
- Electrodeposition by applying an external potential

The specularity of the silver film can be obtained by means of two processes: starting with a specular substrate (polished steel protected by sol-gel), or polishing the deposited silver coating, either mechanically or electrolytically.

### Protection of silver coatings

The most crucial part of the production of first surface silver reflectors is the protection of the silver reflective film, in order to prevent thermal degradation, the attack of the chemical agents of the atmosphere (specially sulfides) and to give the assembly some sufficient mechanical properties.

The protective coatings used have a composition (100-x) SiO₂-x MₙO₂ with x=0-20%, wherein MₙO₂ = Al₂O₃, TiO₂, ZrO₂ B₂O₃. These coatings are deposited by the sol-gel technique in a way similar to the one described in the protection of the substrates.

The first requirement for a convenient protection of the silver reflectors is that the coating is recently deposited, in order to avoid possible contamination by sulfides, dust or grease.

The silver reflective film is washed with absolute ethanol for surface hydroxylation and then the protective coating is deposited.

The process of deposition of the protective coatings on the silver reflective film is done in a similar way to the one described above for the metal substrates.

Thermal treatment to sinter the protective films is carried out at a temperature between 450 and 500° C in inert atmospheres (Ar, N₂) in order to prevent oxidation of the silver and diffusion thereof towards the protective coating with the subsequent loss of reflectivity.

### Properties of the coated substrates

The behavior of the coated substrates has been studied by means of applying different thermal treatments at different temperatures (200, 300 and 400° C).

The results of these tests show that the obtained coatings are an effective barrier against thermal oxidation up to 300° C. No type of degradation in the optical properties of the coating is produced, therefore, the reflectivity as well as the specularity are maintained.

The process claimed in this patent considerably improves the results obtained by other types of coatings applied to metal silver reflectors.

The materials obtained by this patent can be used for multiple purposes wherein highly reflective materials are used. Specially, they can be used in different uses of solar energy (primary and secondary reflectors of thermal and photovoltaic solar collectors, solar furnaces) lighting (lamp reflectors, screens), etc.

### Examples

Example 1) is a SiO₂ coating on a silver reflector deposited on glass by evaporation, example 2) is a ZrO₂-SiO₂ coating on a silver reflector prepared in the same way as in the previous example, example 3) is a 80 SiO₂ - 20B₂O₃ coating on metal silver deposited by electroless on electropolished carbon steel protected by 6 layers of SiO₂ deposited by sol-gel, example 4) is a 95 SiO₂ - 5 Al₂O₃ coating on silver deposited by electroless plating, on a glass substrate protected by SiO₂, example 5) consists of evaporated silver protected by a dense coating of SiO₂ on a stainless steel substrate protected by SiO₂, example 6) is an electropolished metal silver substrate protected by a layer of 95 SiO₂ - 5 TiO₂.

### Example 1) SiO₂ coating on a silver reflector deposited on glass by evaporation

The starting solutions were prepared from tetraethyl orthosilicate (TEOS), ethanol and distilled water using H₂SO₄ and acetic acid as catalysts. After hydrolysis, the solutions were aged and diluted with ethanol up to viscosities between 1 and 7 cP. The H₂O/TEOS ethanol ratio was always equal to 4 and the ethanol/TEOS ratio was 14. 20% of the distilled water was substituted by acetic acid and the H₂SO₄/TEOS ratio was 0.1; the pH of the solutions, stable for more than one month, varied between 2 and 3.

The coatings were prepared by immersion, dried at 60° C and sintered at 450° C for 1 hour in a N₂ atmosphere. The maximum thickness obtained for a crack-free single layer film was 400 nm; by means of applying multilayers, thicknesses of 2 µm were obtained.

In order to study the durability of the silver reflectors protected by SiO₂ deposited by sol-gel, diverse tests of the resistance to oxidation as to temperature have been carried out, with thermal treatments at 200, 300 and 400° C. The results of these tests are shown in table I.

### Example 2) is a ZrO₂-SiO₂ coating on a silver reflector prepared in the same way as in the previous example

The precursor solutions were processed in two steps. First of all, an anhydrous solution of zirconium isopropoxide (ZrIP) in ethanol, catalyzed with H₂SO₄ was prepared according to the ratio ZrIP/ethanol/H₂SO₄ = 1/10/0.8 and stirred for 4 hours until a total transparency (S1) was obtained. On the other hand, solutions made from TEOS, water and ethanol, catalyzed with H₂SO₄ and acetic acid, were prepared, according to the ratio TEOS/H₂O/ethanol/H₂SO₄ = 1/4/10/0.2. After stirring for one hour, this S2ₓ solution was aged for 6 hours.

The final solution was prepared in the second step:
ZrO₂ : S1 + 4 mols of H₂O, stirring 1 hour
80 SiO₂ - 20 ZrO₂ : 20-S1 drop by drop on S2ₓ, stirring 1 hour

In all cases, 25% of the water has been substituted by acetic acid.

The solution was allowed to age for 24 hours and then coatings, which were dried and thermally treated at 500° C, were made. The resulting layers were transparent and homogeneous in all cases. The maximum thickness without cracks was 300nm.

The results of the durability tests carried out are shown on table I.

### Example 3) 80 SiO₂ - 20 B₂O₃ coating on metal silver deposited by electroless plating on electropolished carbon steel protected by 6 layers of SiO₂ deposited by sol-gel

Example 3) is a coating with a composition of 80 SiO₂ - 20 B₂O₃. First of all, a solution according to the ratio TEOS/H₂O/ethanol = 1/6/5 was prepared under reflux in a N₂ atmosphere at 70° C, for 4 hours. H₂SO₄ (6% weight of the total water) was used as a catalyst. Trimethyl borate (TMB) was added to this solution in order to attain the sought molar ratio, continuing the reflux for one hour at the same temperature. Afterwards, it was diluted with the amount of ethanol needed to obtain an alkoxide/ethanol ratio of 1/10, continuing reflux for another hour. The obtained solution is transparent and stable. Coatings should be made in an atmosphere with a relative humidity less than 20% in order to produce homogenous and transparent layers. Thermal treatment was carried out at 500° C and the maximum thickness achieved without cracks was 400 nm.

The reflective silver layer was deposited by electroless plating as of an ammoniacal solution prepared in the following manner: 5 grams of silver nitrate were diluted in 90 ml of water, adding ammonia until resolution of the formed precipitate. Then, 2 grams of KOH dissolved in 90 ml of water were added, forming another brown precipitate. Ammonia is added again with constant stirring until the formed precipitate redissolves. The reducing solution is comprised of 25 gr. of glucose and 5 grams of tartaric acid in 500 milliliters of water. To produce the silver plating, one part of the reducing solution is mixed with three parts of the silver solution.

The precursor solution of the six SiO₂ layers deposited to protect the carbon steel substrate was made in two steps (2) in order to obtain a denser final coating. In the first step, the H₂O/EtOH/TEOS/H₂SO₄ ratio was equal to 1/11.4/1/0.0004, maintaining the solution under reflux for 90 minutes at 60° C. In a second step, the ratio was modified to 1/11.4/5.1/0.016, keeping the solution under reflux for 60 minutes at 40° C. The thicknesses of the obtained layers varied between 250 and 400 nm.

The results of the durability tests carried out appear in Table I.

### Example 4) 95 SiO₂ - 5 Al₂O₃ coating on silver deposited by electroless plating, on a glass substrate protected by SiO₂

The protective solution of the glass is the one described in example 3) for the protection of carbon steel.

The 95 SiO₂ - 5 Al₂O₃ solution is prepared in two steps in a manner similar to the 80 SiO₂ - 20 B₂O₃ solution of example 3). The first step of the preparation of SiO₂ is the same and the second one varies in the alkoxide used which in this example is aluminum isopropoxide (AlIP).

The results of the durability tests carried out appear in Table I.

### Example 5) Evaporated silver protected by a dense SiO₂ coating on a stainless steel substrate protected by SiO₂

In this example, the same solution to protect the stainless steel substrate and the reflective silver coating is used, the precursor of the dense SiO₂ coating being made in two steps, described in example 3).

The results of the durability tests carried out appear in Table I.

### Example 6) Electropolished metal silver substrate protected with a 95 SiO₂ - 5 TiO₂ layer

In this example, the reflective film is made by electropolishing a substrate formed by an electropolished silver sheet.

The protective solution is prepared in two steps: SiO₂ is prepared in the first step in a similar way as that of example 3), hydrolyzing the tetrabutyl orthotitanium (TBTi) in the previous solution to obtain the desired ratio 95 SiO₂ - 5 TiO₂.

The results of the durability tests carried out appear in Table I.

**TABLE I**

| **THERMAL DURABILITY TESTS** | | | | |
|---|---|---|---|---|
| EXAMPLE | SPECULAR REFLECTIVITIES | | | |
| | RECENTLY PREPARED | 200° C | 300° C | 400° C |
| 1 | 0.96 | 0.96 | 0.96 | 0.88 |
| 2 | 0.95 | 0.95 | 0.95 | 0.85 |
| 3 | 0.95 | 0.95 | 0.95 | 0.84 |
| 4 | 0.96 | 0.96 | 0.96 | 0.87 |
| 5 | 0.95 | 0.95 | 0.95 | 0.85 |
| 6 | 0.94 | 0.94 | 0.94 | 0.87 |

Thermal treatments carried out in a conventional furnace with natural ventilation at temperatures of 200, 300 and 400° C for 72 hours.

## Claims

1. A process for producing a protective coating solution for silver substrates or silver coatings produced by sol-gel, the process comprising dissolving and hydrolyzing
metal alkoxide selected from at least one of Si-alkoxide, Zr-alkoxide, Ti-alkoxide, Al-alkoxide, B-alkoxide and combinations thereof, water, alcohol, and optionally acetates or/nitrates of Ca and Ba and H₃PO₄, in the presence of an acid catalyst for a hydrolysis reaction, characterized in that at least sulfuric acid is used as the catalyst in a ratio of H₂SO₄/alkoxide of 0.0004 - 0.816.

2. A process according to claim 1, characterized in that for preparing the coating solution, metal alkoxide, water, alcohol and optional acetates or/nitrates of Ca and Ba and H₃PO₄ are dissolved and hydrolyzed in the presence of acetic acid as a second catalyst being additional to sulfuric acid, in a ratio acetic acid/water of 0.2-0.25.

3. A process according to claim 1 or 2, characterized in that in preparing the coating solution the metal alkoxide is at least one of tetraethylorthosilicate (TEOS) as a SiO₂, precursor, Zr-isopropoxide (ZrIP) a Zr₂O precursor, tetraethylorthotitanate (TEOTi) as a Ti₂O, precursor, Alisopropoxide (AlIP) as a Al₂O₃ precursor, and trimethylborate (TMB) as a B₂O₃ precursor, whereby a molar ratio of water/alkoxides is maintained between 2 and 10.

4. A process according to claim 3, characterized in that a water and TEOS are present in the coating solution in a ratio of water/TEOS of 4.

5. A process according to any of claims 1 to 4, characterized in that the coating solution has a final composition comprising 20-100% molar SiO₂, 10-100% molar ZrO₂, 10-100% TiO₂, 10-30% molar Al₂O₃, 5-40% B₂O₃.

6. A process according to any of claims 1 to 4, characterized in that the coating solution has a final composition comprising 20-100% molar SiO₂, 0-20% molar ZrO₂,0-20% TiO₂, 0-20% molar Al₂O₃, 0-80% B₂O₃.

7. A process according to claim 6, characterized in that the coating solution has a final composition comprising at least 80% molar SiO₂, and 0-20% molar ZrO₂, 0-20% TiO₂, 0-20% molar Al₂O₃, 0-20% B₂O₃.

8. A process according to any of claims 1 to 4, characterized in that the coating solution has a final composition comprising 85-98% molar SiO₂ and 2-15% molar ZrO₂.

9. A process according to any of claims 1 to 4, characterized in that the coating solution has a final composition comprising final comprising 90-98% molar SiO₂ and 2-10% molar ZrO₂.

10. A process according to any of claims 5 to 7, characterized in that the final composition of the coating solution further comprises 1-20% of molar CaO, BaO and P₂O₅.

11. A method for providing a protective coating on a silver substrate or on a silver coating produced by sol-gel, wherein a coating solution prepared according to the process of any of claims 1 to 11 is applied on the silver substrate or silver coating and subjected to a drying treatment between 50 and 150ºC for 15-30 minutes, and to a subsequent thermal treatment between 400 and 600QC, for 10 to 60 minutes, in atmospheres of air, N₂ or Ar.

12. A method according to claim 11, wherein the coating solution is applied on a silver coating and the thermal treatment consists of sintering at a temperature between 450 and 500ºC to provide the protective coating.

13. A protective coating for a silver substrate or for a silver coating produced by sol-gel, when prepared in accordance with the method according to claim 11 or 12.

14. A protective coating according to claim 13 characterized in that the protective coating is resistant to oxidation and maintains high reflectivity at temperatures up to 300ºC.

## Patentansprüche

1. Verfahren zum Herstellen einer Schutzüberzugslösung für Silbersubstrate oder Silberüberzüge, hergestellt durch Sol-Gel, wobei das Verfahren das Auflösen und Hydrolysieren von Metallalkoxid, ausgewählt aus mindestens einem der folgenden Alkoxide: Si-Alkoxid, Zr-Alkoxid, Ti-Alkoxid, Al-Alkoxid, B-Alkoxid, und Kombinationen davon, Wasser, Alkohol, und gegebenenfalls Acetaten oder Nitraten von Ca und Ba und H₃PO₄ in Gegenwart eines Säurekatalysators für eine Hydrolysereaktion umfaßt, **dadurch gekennzeichnet**, daß mindestens Schwefelsäure als Katalysator in einem Verhältnis von H₂SO₄/Alkoxid von 0,0004-0,816 verwendet wird.

2. Verfahren nach Anspruch 1, **dadurch gekennzeichnet**, daß zum Herstellen der Überzugslösung Metallalkoxid, Wasser, Alkohol und gegebenenfalls Acetate oder Nitrate von Ca und Ba und H₃PO₄ in Gegenwart von Essigsäure als zweiter Katalysator, welcher zusätzlich zu Schwefelsäure in einem Verhältnis von Essigsäure/Wasser von 0,2-0,25 vorhanden ist, aufgelöst und hydrolysiert werden.

3. Verfahren nach Anspruch 1 oder 2, **dadurch gekennzeichnet**, daß beim Herstellen der Überzugslösung das Metallalkoxid mindestens eines von Tetraethylorthosilicat (TEOS) als SiO₂-Vorstufe, Zr-lsopropoxid (ZrIP) als Zr₂O-Vorstufe, Tetraethylorthotitanat (TEOTi) als Ti₂O-Vorstufe, Al-lsopropoxid (AIIP) als Al₂O₃-Vorstufe und Trimethylborat (TMB) als B₂O₃-Vorstufe ist, wobei ein Molverhältnis von Wasser/Alkoxide zwischen 2 und 10 gehalten wird.

4. Verfahren nach Anspruch 3, **dadurch gekennzeichnet**, daß Wasser und TEOS in der Überzugslösung in einem Verhältnis von Wasser/TEOS von 4 vorhanden sind.

5. Verfahren nach einem der Ansprüche 1 bis 4, **dadurch gekennzeichnet**, daß die Überzugslösung eine Endzusammensetzung aufweist, die 20-100 mol% SiO₂, 10-100 mol% ZrO₂, 10-100 % TiO₂, 10-30 mol% Al₂O₃, 5-40 % B₂O₃ umfaßt.

6. Verfahren nach einem der Ansprüche 1 bis 4, **dadurch gekennzeichnet**, daß die Überzugslösung eine Endzusammensetzung aufweist, die 20-100 mol% SiO₂, 0-20 mol% ZrO₂, 0-20 % TiO₂, 0-20 mol% Al₂O₃, 0-80 % B₂O₃ umfaßt.

7. Verfahren nach Anspruch 6, **dadurch gekennzeichnet**, daß die Überzugslösung eine Endzusammensetzung aufweist, die mindestens 80 mol% SiO₂ und 0-20 mol% ZrO₂, 0-20 % TiO₂, 0-20 mol% Al₂O₃, 0-20 % B₂O₃ umfaßt.

8. Verfahren nach einem der Ansprüche 1 bis 4, **dadurch gekennzeichnet**, daß die Überzugslösung eine Endzusammensetzung aufweist, die 85-98 mol% SiO₂ und 2-15 mol% ZrO₂ umfaßt.

9. Verfahren nach einem der Ansprüche 1 bis 4, **dadurch gekennzeichnet**, daß die Überzugslösung eine Endzusammensetzung aufweist, die 90-98 mol% SiO₂ und 2-10 mol% ZrO₂ umfaßt.

10. Verfahren nach einem der Ansprüche 5 bis 7, **dadurch gekennzeichnet**, daß die Endzusammensetzung der Überzugslösung außerdem 1-20 mol% CaO, BaO und P₂O₅ umfaßt.

11. Verfahren zum Bereitstellen eines Schutzüberzugs auf einem Silbersubstrat oder auf einem Silberüberzug, hergestellt durch Sol-Gel, worin eine Überzugslösung, die gemäß dem Verfahren nach einem der Ansprüche 1 bis 11 hergestellt wurde, auf das Silbersubstrat oder den Silberüberzug aufgetragen und einer Trocknungsbehandlung zwischen 50 und 150°C während 15-30 Minuten und einer nachfolgenden Wärmebehandlung zwischen 400 und 600°C während 10 bis 60 Minuten in Atmosphären aus Luft, N₂ oder Ar unterzogen wird.

12. Verfahren nach Anspruch 11, worin die Überzugslösung auf einen Silberüberzug aufgetragen wird und die Wärmebehandlung aus einem Sintem bei einer Temperatur zwischen 450 und 500°C besteht, um den Schutzüberzug bereitzustellen.

13. Schutzüberzug für ein Silbersubstrat oder für einen Silberüberzug, hergestellt durch Sol-Gel, wenn er gemäß dem Verfahren nach Anspruch 11 oder 12 hergestellt ist.

14. Schutzüberzug nach Anspruch 13, **dadurch gekennzeichnet**, daß der Schutzüberzug gegen Oxidation beständig ist und ein hohes Reflexionsvermögen bei Temperaturen bis zu 300°C beibehält.

## Revendications

1. Procédé pour produire une solution de revêtement de protection pour des substrats en argent ou des revêtements en argent produits par sol-gel, ledit procédé consistant à dissoudre et hydrolyser un alcoxyde de métal choisi parmi un alcoxyde de Si, un alcoxyde de Zr, un alcoxyde de Ti, un alcoxyde d'Al, un alcoxyde de B et des combinaisons de ceux-ci, de l'eau, de l'alcool, et le cas échéant des acétates et/ou nitrates de Ca et Ba, et du H₃PO₄, en présence d'un catalyseur acide pour une réaction d'hydrolyse, caractérisé en ce que l'on utilise comme catalyseur au moins de l'acide sulfurique selon un ratio du H₂SO₄ sur l'alcoxyde de 0,0004 à 0,816.

2. Procédé selon la revendication 1, caractérisé en ce que, pour préparer la solution de revêtement, on dissout et on hydrolyse de l'alcoxyde de métal, de l'eau, de l'alcool et le cas échéant des acétates et/ou nitrates de Ca et Ba et du H₃PO₄ en présence d'acide acétique comme deuxième catalyseur en plus de l'acide sulfurique, selon un ratio de l'acide acétique sur l'eau de 0,2 à 0,25.

3. Procédé selon la revendication 1 ou la revendication 2, caractérisé en ce que, lors de la préparation de la solution de revêtement, l'alcoxyde de métal est au moins l'un parmi les orthosilicate de tétraéthyle (TEOS) en tant que précurseur du SiO₂, isopropoxyde de Zr (ZrIP) en tant que précurseur du ZrO₂, orthotitanate de tétraéthyle (TEOTi) en tant que précurseur du TiO₂, isopropoxyde d'Al (AlIP) en tant que précurseur de l'Al₂O₃, et borate de triméthyle (TMB) en tant que précurseur du B₂O₃, un ratio molaire de l'eau sur les alcoxydes étant maintenu entre 2 et 10.

4. Procédé selon la revendication 3, caractérisé en ce que de l'eau et du TEOS sont présents dans la solution de revêtement selon un ratio de l'eau sur le TEOS égal à 4.

5. Procédé selon l'une quelconque des revendications 1 à 4, caractérisé en ce que la solution de revêtement a une composition finale comprenant de 20 à 100 % molaires de SiO₂, 10 à 100 % molaires de ZrO₂, 10 à 100 % molaires de TiO₂, 10 à 30 % molaires d'Al₂O₃, 5 à 40 % de B₂O₃.

6. Procédé selon l'une quelconque des revendications 1 à 4, caractérisé en ce que la solution de revêtement a une composition finale comprenant de 20 à 100 % molaires de SiO₂, 0 à 20 % molaires de ZrO₂, 0 à 20 % molaires de TiO₂, 0 à 20 % molaires d'Al₂O₃, 0 à 80 % de B₂O₃.

7. Procédé selon la revendication 6, caractérisé en ce que la solution de revêtement a une composition finale comprenant au moins 80% de molaires de SiO₂ et de 0 à 20 % molaires de ZrO₂, 0 à 20 % molaires de TiO₂, 0 à 20 % molaires d'Al₂O₃, 0 à 20 % de B₂O₃.

8. Procédé selon l'une quelconque des revendications 1 à 4, caractérisé en ce que la solution de revêtement a une composition finale comprenant de 85 à 98 % molaires de SiO₂ et de 2 à 15 % molaires de ZrO₂.

9. Procédé selon l'une quelconque des revendications 1 à 4, caractérisé en ce que la solution de revêtement a une composition finale comprenant de 90 à 98 % molaires de SiO₂ et de 2 à 10 % molaires de ZrO₂.

10. Procédé selon l'une quelconque des revendications 5 à 7, caractérisé en ce que la composition finale de la solution de revêtement comprend en plus de 1 à 20 % molaires de CaO, BaO et P₂O₅.

11. Méthode de dépôt d'un revêtement protecteur sur un substrat en argent ou sur un revêtement en argent produit par sol-gel, dans laquelle on applique sur le substrat en argent ou sur le revêtement en argent une solution de revêtement préparée selon le procédé de l'une quelconque des revendications 1 à 11 et on la soumet à un traitement de séchage entre 50 et 150 °C pendant 15 à 30 minutes et ensuite à un traitement thermique entre 400 et 600 °C pendant 10 à 60 minutes sous des atmosphères d'air, N₂ ou Ar.

12. Méthode selon la revendication 11, dans laquelle la solution de revêtement est appliquée sur un revêtement en argent et le traitement thermique consiste en un frittage à une température de 450 à 500 °C donnant le revêtement protecteur.

13. Revêtement protecteur pour un substrat en argent ou pour un revêtement en argent produit par sol-gel, lorsqu'il est préparé conformément à la méthode selon la revendication 11 ou la revendication 12.

14. Revêtement protecteur selon la revendication 13, caractérisé en ce que le revêtement protecteur est résistant à l'oxydation et maintient un pouvoir réfléchissant élevé à des températures atteignant 300 °C.
